# EUROPÄISCHE PATENTSCHRIFT

(11) **EP 0 461 372 B1**
(45) Veröffentlichungstag und Bekanntmachung des Hinweises auf die Patenterteilung: **09.08.1995**
(21) Anmeldenummer: 91106658.7
(22) Anmeldetag: 25.04.1991
(51) Int. Cl.: B65G 47/244

(54) **Vorrichtung zum Verdrehen von Werkstücken, insbesondere zum Wenden von Hülsen**
Turning device for work pieces, especially for turning over bushes
Dispositif pour déplacer des pièces à usiner, notamment pour retourner des douilles

(30) Priorität: 14.06.1990 DE 4019031
(43) Veröffentlichungstag der Anmeldung: 18.12.1991
(73) Patentinhaber: Tetra Laval Holdings & Finance SA, 1009 Pully (CH)
(72) Erfinder: Georgitsis, Nicolaus, D-32369 Rahden (DE); Zierdt, Rolf, D-64342 Seeheim (DE)
(74) Vertreter: Weber, Dieter, Dr.

(56) Entgegenhaltungen:
- CH-A- 667 631
- DE-A- 3 911 861

## Beschreibung

Die Erfindung betrifft eine Vorrichtung zum Verdrehen von mittels einer Fördereinrichtung transportierten Werkstücken, bei welcher ein Werkstückträger lösbar am Förderstrang angeordnet und mit einer Entkopplungseinheit in Eingriff bringbar ist, die ein um eine erste Achse schwenkbar angetriebenes Drehteil aufweist, wobei die erste Achse senkrecht zur Transportrichtung der Fördereinrichtung gerichtet ist und wobei das schwenkbare Drehteil sowohl rotatorisch als auch translatorisch in Richtung der ersten Schwenkachse bewegbar angetrieben ist.

Für die Bearbeitung von Werkstücken besteht immer wieder das Bedürfnis, nach einer Vorbearbeitung in ersten Stufen, wenn die Werkstücke von einer Fördereinrichtung an eine andere Stelle transportiert werden, sie für eine Nachbearbeitung in weiteren Stufen in anderen Drehpositionen zur Verfügung zu haben. Daher werden vor oder nach Fördereinrichtungen Maschinen zum Wenden eingesetzt, wodurch die gesamte Bearbeitungsmaschine groß und aufwendig wird.

Aus der DE-A-39 11 861 ist bereits eine Vorrichtung mit den Merkmalen der eingangs genannten Art bekannt. Mit dieser Vorrichtung soll freier Zugang zu einem Werkstück an einer Arbeitsstation gewährleistet werden. Die Werkstückträger in Gestalt von Paletten liegen lose auf angetriebenen Förderbändern. Auf diesen hat der bekannte Werkstückträger nur dann durch Reibung Förderkontakt, wenn der Werkstückträger (die Palette) gefördert und nicht gerade bearbeitet wird. Nur unter der Bearbeitungsstation wird der bekannte Werkstückträger vom Förderband abgehoben, und dann treten an der Dreheinrichtung befestigte Stifte zur Verdrehsicherung in Eingriff. Am Förderstrang brauchen die Werkstückträger nicht in einer bestimmten Position zu stehen und liegen daher nur durch Reibung auf den besagten Bändern auf.

Aufgabe der Erfindung ist es deshalb, eine Vorrichtung zum Verdrehen von Werkstücken der eingangs genannten Art zu schaffen, mit deren Hilfe einzelne, in einer Reihe transportierte, am Förderstrang fest und gleichwohl lösbar angebrachte Werkstücke um beispielsweise 90° derart gedreht werden können, daß nach Durchlaufen der Vorrichtung alle Werkstücke dieser noch in der Fördereinrichtung befindlichen Reihe gedreht sind.

Diese Aufgabe wird erfindungsgemäß dadurch gelöst, daß am Werkstückträger sich in Richtung der ersten Schwenkachse erstreckende Einsteckteile befestigt sind, die in entsprechende, am Förderstrang befestigte Aufnahmeteile einführbar sind, so daß für ein Verdrehen der Werkstücke am Förderstrang selbst der Werkstückträger außer Eingriff mit dem Förderstrang gebracht wird, er dann um den gewünschten Winkel gedreht und danach wieder in Eingriff mit dem Förderstrang gebracht wird.

Erfindungsgemäß wird vermieden, vor oder hinter der Fördereinrichtung eine besondere Wendestation einzusetzen. Stattdessen erfolgt das Verdrehen der Werkstücke erfindungsgemäß am Förderstrang selbst. Eine Entkopplungseinheit mit einem um die erwähnte erste Schwenkachse angetriebenen Drehteil bringt die Werkstückträger außer Eingriff mit dem Förderstrang, erlaubt ihre Drehung um den gewünschten Winkel und bringt sie danach wieder in Eingriff mit dem Förderstrang.

Unter Strang wird hier eine Reihe von hintereinander und beweglich zueinander angeordnet verlaufenden Teilen verstanden, so daß der Endlosriemen selbst als Förderstrang verstanden werden könnte, vorzugsweise aber auch eine strangförmig angeordnete Reihe von anderen Teilen am Endlosriemen befestigt sein können, welche ihrerseits als Förderstrang die erwähnten Aufnahmeteile tragen. In jedem Falle ist es für die Erfindung bei dieser betrachteten Ausführungsform wesentlich, daß die Aufnahmeteile an einem Förderstrang befestigt sind und mithin selbst strangartig angeordnet sind, d.h. in Gestalt einer Vielzahl von hintereinanderlaufenden Aufnahmeteilen. Wenn nun der Werkstückträger in der erwähnten Richtung verlaufende, nämlich in Richtung der ersten Schwenkachse verlaufende Einsteckteile aufweist, dann können diese in einfacher Weise in die Aufnahmeteile, die am Förderstrang befestigt sind, eingeführt werden. Dies ist das Verbinden, bzw. auf diese Weise kann der Werkstückträger vom Förderstrang und damit vom Endlosriemen gelöst und nach dem Verdrehen auch wieder hineingesteckt werden.

Das Abkoppeln oder Lösen der Werkstückträger vom Förderstrang und ihr Einkoppeln oder Zurückführen in die Eingriffsstellung mit dem Förderstrang gelingt mit Hilfe des schwenkbaren Drehteiles dadurch, daß das schwenkbare Drehteil sowohl rotatorisch als auch translatorisch in Richtung der ersten Schwenkachse bewegbar angetrieben ist. Das schwenkbare Drehteil kann dann nämlich den Werkstückträger durch eine translatorische geradlinige Bewegung in Richtung der ersten Schwenkachse ausklinken, wonach die Schwenkung des Drehteiles um den gewünschten Winkel erfolgt, und danach kann das Drehteil wieder translatorisch um die gleiche Länge geradlinig in die Anfangsposition zurückgeführt werden, so daß der Werkstückträger wieder mit dem Förderstrang verbunden ist.

Es versteht sich, daß der Förderstrang während des Lösens des Werkstückträgers, seines Verdrehens und auch während des Zurückführens und Einklinkens oder Verbindens des Werkstückträgers mit dem Förderstrang im Stillstand gehalten wird. Das Werkstück kommt mit Hilfe der Fördereinrichtung also in einer ersten Drehposition an, wonach der Förderstrang zum Stillstand gebracht wird. Die erfindungsgemäße Vorrichtung entkoppelt dann den Werkstückträger vom Förderstrang, dreht das Werkstück zusammen mit dem Werkstückträger, bringt den Werkstückträger mit dem Förderstrang wieder in Eingriff, und danach erst wird der Förderstrang weiterbewegt. Auf diese Weise kann ein Werkstück nach dem anderen aus einer ersten Drehposition in eine zweite gebracht werden, und dies im Bereich des Förderstranges selbst, ohne daß besondere Einheiten der Fördereinrichtung vor- oder nachgeschaltet werden müßten.

Vorteilhaft ist es erfindungsgemäß ferner, wenn die Transportrichtung der Fördereinrichtung horizontal liegt und die erste Schwenkachse des Drehteils vertikal verläuft, daß das Drehteil als eine an wenigstens zwei Stellen gelagerte Welle ausgebildet ist und daß die Fördereinrichtung einen Endlosriemen aufweist. Werkstücke werden häufig von Fördereinrichtungen transportiert, deren Bewegungsrichtung im Bereich der Werkstücke horizontal verläuft. Man kann sich zwar auch im Raum schräg verlaufende Förderer vorstellen, die Betrachtung richtet sich aber für die vorliegende Erfindung beispielsweise auf die horizontale Förderrichtung mit der Folge, daß dann die senkrecht dazu verlaufende erste Schwenkachse des Drehteils bei dem hier betrachteten Beispiel vertikal liegt. Im Falle des nicht nur rotatorisch (zum Schwenken) sondern auch translatorisch bewegten Drehteiles wird das Drehteil also in seiner eigenen Längsrichtung vertikal hubweise aus einer ersten Position in eine zweite und wieder zurück verschoben. Hierfür ist es zweckmäßig, das Drehteil als Welle auszubilden und es an wenigstens zwei Stellen zu lagern, so daß die translatorische Bewegungsrichtung festgelegt wird und gleichwohl die Schwenkung der Welle um ihre Mittelachse möglich ist. Endlosriemen als Fördereinrichtungen sind zwar an sich bekannt, erfindungsgemäß ist es aber bevorzugt, die Drehachsen der Umlaufrollen dieser Endlosriemen entweder horizontal oder vertikal anzuordnen, um die Bewegungen der Entkopplungseinheit mit dem Endlosriemen funktionell und auch räumlich geeignet synchronisieren und zuordnen zu können. Verlaufen die Drehachsen der Umlenkrollen des Endlosriemens beispielsweise horizontal, dann sollte der Endlosriemen entsprechende Ausnehmungen aufweisen, durch welche das schwenkbare Drehteil im Stillstand des Endlosriemens geradlinig bei seiner translatorischen Bewegung hindurchfahren kann, bevor es wieder aus dem Endlosriemen außer Eingriff gelangt. Denkbar ist aber auch die vertikale Anordnung der Drehachsen der Umlenkrollen des Endlosförderers, weil dann die translatorische Bewegungsrichtung bzw. die der ersten Schwenkachse des Drehteils neben dem Endlosriemen eingerichtet werden kann.

Günstig ist es gemäß der Erfindung auch, wenn am Drehteil der Entkopplungseinheit eine ebene, quer zur ersten Schwenkachse ausgerichtete Aufnahmeplatte mit Einrastmitteln für den Eingriff mit dem Werkstückträger befestigt ist. Für jede der beiden vorgenannten Anordnungsmöglichkeiten des Endlosriemens kann die hier zuletzt erwähnte Einrichtung mit der Aufnahmeplatte verwendet werden. Diese Platte dient zur Aufnahme des Werkstückträgers, sie ermöglicht also eine mechanische Kopplung zwischen dem Drehteil, welches vorzugsweise als Welle ausgebildet sein kann, mit dem Werkstückträger, um diesen in der gewünschten Weise im Raum zu bewegen. Dabei ist es zweckmäßig, die Aufnahmeplatte mit Einrastmitteln zu versehen, beispielsweise Stiften, vorzugsweise Spreizstiften, die entweder federnd vorgespannt sind und in Ausnehmungen am Werkstückträger eingreifen und durch Druck oder Zug in Eingriff und außer Eingriff gebracht werden können; oder die Spreizstifte können auch durch besondere Steuereinrichtungen in die zurückgezogene Position bzw. in die gespreizte Einrastposition bewegt werden. Die vorstehenden Maßnahmen dienen dazu, eine zuverlässige und feste Kopplung zwischen dem Drehteil und dem Werkstückträger zu schaffen, so daß bei kurzen Hüben der Entkopplungseinheit gleichwohl ein exaktes Lösen, Verdrehen und Anbringen des Werkstückträgers vom Förderstrang und an diesem ermöglicht wird.

Dabei ist es besonders zweckmäßig, wenn erfindungsgemäß der Werkstückträger als hülsenförmiger, die Werkstücke wenigstens teilweise umgreifender Hohlkörper ausgebildet ist, dessen Mittellängsachse in am Förderstrang angebrachter Stellung parallel zur ersten Schwenkachse liegt und an dessen Seitenwandungen wenigstens zwei in einem Winkel zueinander angebrachte und Führungsschienen als Einsteckteile aufweisende Führungsplatten befestigt sind. Der Werkstückträger wird also über seine Seitenwandungen mit dem Förderstrang verbunden, wobei das Verbinden eine Einsteckbewegung von Führungsschienen bedeutet. Umgekehrt erfolgt das Lösen ebenso dadurch, daß die an den Führungsplatten vorzugsweise seitlich angebrachten Führungsschienen aus den Aufnahmeteilen am Förderstrang herausgezogen werden. Damit ist der Werkstückträger vom Förderstrang gelöst und kann nun um den gewünschten Winkel gedreht werden. Dieser ist vorzugsweise 90°, kann aber auch je nach der gewünschten Ausführungsform jeden anderen Betrag haben. Unter entsprechendem Winkel, bei der hier betrachteten bevorzugten Ausführungsform also unter 90° versetzt zur einen Führungsplatte mit ihren beiden Führungsschienen ist an der Seitenwandung des Werkstückträgers eine weitere Führungsplatte mit seitlichen Führungsschienen angebracht, so daß nach dem Lösen des Werkstückträgers vom Förderstrang und nach der Drehung des Werkstückträgers um diese vorzugsweise 90° der Werkstückträger in äquivalenter Weise mit dem Förderstrang wieder in Eingriff gebracht werden kann. Vor diesem letzten Eingriff liegt dann wieder eine Führungsplatte mit seitlich angeordneten Führungsschienen dem Förderstrang so gegenüber, daß durch die translatorische Bewegung des schwenkbaren Drehteils die Führungsschienen nur noch in die Aufnahmeteile am Förderstrang eingeführt zu werden brauchen. Damit ist der Eingriff des Werkstückträgers mit dem Förderstrang wieder erreicht. Mit einem solchen als Hohlkörper ausgebildeten Werkstückträger ist es möglich, in ihrer Gestalt etwa zylinderförmige Werkstücke zu transportieren und in der gewünschten Weise zu verdrehen. Es ist bevorzugt, an den Seitenwandungen des als Hohlkörper ausgebildeten Werkstückträgers soviele Führungsplatten anzuordnen, in Draufsicht auf den Werkstückträger, wenn man in Richtung seiner Längsmittelachse blickt, beispielsweise polygonartig anzuordnen, daß der ganze Umfang des Werkstückträgers mit Führungsplatten versehen ist; und zwar in einer Anzahl, daß jeweils bei dem Verdrehen des Werkstückträgers bzw. vor dem Drehen und nach dem Drehen immer eine Führungsplatte mit ihren Führungsschienen den Aufnahmeteilen am Förderstrang gegenüberliegt. Im Falle einer 90°-Drehung könnte der Werkstückträger außen vier Führungsplatten tragen.

Vorteilhaft ist es gemäß der Erfindung ferner, wenn der Förderstrang eine fortlaufende Reihe von am Endlosriemen angebrachten Platten aufweist, an denen als Aufnahmeteile für die Einsteckteile der Werkstückträger durch Nasen gebildete Haltenuten befestigt sind, wobei vorzugsweise der Endlosriemen um vertikale Achsen umlaufend vorgesehen ist. Hier wird also die oben schon angesprochene Ausführungsform erläutert, bei welcher die eigentliche Ebene des Endlosriemens im Bereich seines geraden Trums vertikal verläuft, wobei die Reihe von an diesem angebrachten Platten, wenn man eine gedachte Ebene durch die Platten legt, diese Ebene ebenfalls vertikal angeordnet ist. Entsprechend vertikal verlaufen dann die erwähnten Nasen, mit deren Hilfe Haltenuten in der gleichen Richtung verlaufend gebildet sind. Man kann sich gut vorstellen, daß Führungsschienen in derartige Haltenuten eingeführt bzw. aus diesen wieder herausgezogen werden können. An den Platten sind auch vorzugsweise Anschläge anzubringen, damit bei der hier betrachteten Ausführungsform mit den vertikalen Richtungen und Ebenen das Gewicht einen Werkstückträger nur bis zu den Anschlägen hinunterbewegen kann. Damit ist eine definierte Höhenposition festgelegt, so daß die Führungsplatten mit den Werkstückträgern dann in der richtigen Höhe am Endlosriemen hängen, weil die am Endlosriemen befestigten Platten in genau einstellbarer Höhe bewegt werden. Über die gesamte Länge des Endlosriemens kann man sich die Reihe von Platten angebracht denken, und somit könnte man entsprechend viele Werkstückträger am Endlosriemen befestigen, so daß bei der intermittierenden Vorwärtsbewegung des Endlosriemens die in Rede stehende Fördereinrichtung eine recht hohe Transportleistung hat.

Vorteilhaft ist es gemäß der Erfindung auch, wenn die Platte im wesentlichen eben ist, wenn die Haltenuten im Abstand voneinander angeordnet sind, sich nur über einen Teil der in Richtung parallel zur ersten Schwenkachse verlaufenden Höhe der Platte und in eben dieser Richtung erstrecken und wenn ihre offenen Seiten einanderzugerichtet sind und wenn zwischen den Haltenuten eine nach außen offene, teilzylindermantelförmige Einbuchtung vorgesehen ist. Die Anordnung der Haltenuten läßt sich am besten in Richtung der ersten Schwenkachse beschreiben, wenn man also längs auf die Haltenuten blickt, welche dann U-förmige Gestalt haben derart, daß die beiden offenen Enden der U's einanderzugerichtet sind. Die zwischen den auf diese Weise angeordneten Haltenuten befindliche Einbuchtung stellt in derselben Blickrichtung wie eben eine Teilkreislinie dar oder kann auch in Blickrichtung senkrecht dazu als Mulde beschrieben werden, die dazu vorgesehen ist, die Drehung der Werkstückträger neben der Platte auch dann zu ermöglichen, wenn der Werkstückträger sehr dicht neben der Platte gedreht wird und den Raum der Einbuchtung braucht, um bei der Drehung seine äußeren Teile, z.B. die Führungsplatten, an der Platte mit der Einbuchtung vorbeibewegen zu können.

Bei vorteilhafter weiterer Ausgestaltung der Erfindung ist im Abstand von wenigstens einer der in einer fortlaufenden Reihe am Endlosriemen angebrachten Platten in Transportrichtung des Endlosriemens hinter der ersten Entkopplungseinheit eine zweite Entkopplungseinheit angeordnet, die beide einen gemeinsamen Antrieb, vorzugsweise mit Luftzylindern, haben. Bei dieser betrachteten Ausführungsform ist am Endlosriemen eine fortlaufende Reihe von Platten angebracht zu denken, die sich zusammen mit dem Endlosriemen in der besagten Transportrichtung intermittierend bewegen. Greift man eine dieser Platten heraus, wenn sie beim Stillstand des Endlosriemens eine bestimmte Position eingenommen hat, und nimmt man an, daß dies gerade die Position ist, in welcher die erste Entkopplungseinheit eingreifen kann, dann wird dahinter die zweite Entkopplungseinheit in dem genannten Abstand angenommen derart, daß auch über der zweiten Entkopplungseinheit im Stillstand des Endlosriemens eine Platte angeordnet ist und dazwischen sich eine weitere Platte befindet, in deren Bereich aber keine Entkopplungseinheit angeordnet ist. Besonders bevorzugt ist es sogar, im Abstand von zwei Platten hinter der ersten die zweite Entkopplungseinheit anzuordnen. Mit anderen Worten befinden sich dann zwischen den zwei Platten, die jeweils gerade über den Entkopplungseinheiten angeordnet sind, zwei weitere Platten. Der Endlosriemen muß also bei dieser betrachteten Ausführungsform aus dem ersten Stillstand um drei Schritte in den damit vierten Stillstand vorbewegt werden, um die Position mit der zweiten Entkopplungseinheit zu erreichen. Befindet sich also die Entkopplungseinheit sozusagen unter der ersten Platte, dann ist der Abstand zur zweiten Entkopplungseinheit so gewählt, daß sich die zweite Entkopplungseinheit über der vierten Platte befindet. Diese Maßnahmen erlauben das gleichzeitige Drehen von zwei Werkstückträgern mit darin befindlichen Werkstücken. Dabei ist es besonders bevorzugt, wenn sich der Endlosriemen bei einem Takt um die Länge zweier Platten vorbewegt und nicht nur um die Länge einer Platte. Dann wird mit Vorteil auch bei der Anordnung von zwei Entkopplungseinheiten in dem vorstehend beschriebenen Abstand zueinander in jeder Entkopplungseinheit immer nur ein Werkstückträger entkoppelt gedreht und wieder eingekoppelt.

Bevorzugt ist erfindungsgemäß die Verwendung einer solchen Vorrichtung zum Wenden von mit einer Längssiegelnaht versehen Papierhülsen für die Herstellung von Fließmittelpackungen. Gerade bei einer solchen Anwendungsart ist es wichtig, die Längssiegelnaht einer mit Kunststoff beschichteten Papierhülse oder Kartonhülse bezüglich weiteren Behandlungsstationen richtig anzuordnen. Leere Papierhülsen können sehr günstig von dem als Hohlkörper ausgebildeten Werkstückträger gehaltert und in der vorstehend beschriebenen Weise gehandhabt werden.

Der Antrieb der erfindungsgemäßen Vorrichtung zum Verdrehen der Werkstücke, z.B. der Papierhülsen, gelingt zweckmäßig und präzise durch pneumatische Mittel. Beispielsweise kann man beide als Wellen ausgebildete Drehteile der beiden Entkopplungseinheiten so lagern, daß ihr jeweils eines Lager in einer Führungsbrücke liegt, welche also die beiden Wellen der beiden Entkopplungseinheiten überbrückend verbindet. Gleichzeitig sind die Wellen rotatorisch gelagert. Ordnet man beispielsweise auf der Führungsbrücke einen Luftzylinder mit entsprechenden Gelenken an, dann können beide Drehteile gemeinsam von diesem einen Luftzylinder gedreht werden. Bewegt man ferner die Führungsbrücke translatorisch in einer Richtung parallel zur ersten Schwenkachse der Drehteile, dann werden damit beide Drehteile gleichzeitig translatorisch bewegt. Diese geradlinige Bewegungskomponente läßt sich sehr günstig durch eine Steuerkurve erzeugen, welche einen Hebel um einen Schwenkpunkt so zu verschwenken erlaubt, daß die Führungsbrücke synchron zu den anderen Bewegungen der Maschine immer im richtigen Augenblick die translatorische Bewegung des Drehteils hervorruft.

Mit der Vorrichtung gemäß der Erfindung kann man aus einer ersten Bearbeitungsstation ankommende Papierhülsen gut in den Werkstückträgern aufnehmen, über den Endlosriemen in der Transportrichtung beispielsweise horizontal weiterführen, an der bestimmten ersten Position und im Abstand von zwei Platten an der beschriebenen bestimmten zweiten Position durch Anheben vom Förderstrang entkoppeln, gleichzeitig um 90° drehen, durch Absenken der Drehteile und der damit verbundenen Werkstückträger wieder mit dem Förderstrang verbinden und nach Einschalten des Endlosriemens in Transportrichtung horizontal weiterbefördern. Beim Takt eines solchen Endlosriemens mit intermittierender Bewegung über eine Länge von jeweils zwei Positionen oder zwei Platten der beschriebenen Art wird auf diese Weise durch die beiden Entkopplungseinheiten mit sicherer Funktion jede Hülse entlang des ganzen Endlosriemens um die gewünschte Drehung geschwenkt, so daß in Transportrichtung hinter der Fördereinrichtung weitere Bearbeitungen vorgenommen werden können.

Weitere Vorteile, vorteilhafte Merkmale und Anwendungsmöglichkeiten der vorliegenden Erfindung ergeben sich aus der folgenden Beschreibung in Verbindung mit den anliegenden Zeichnungen einer bevorzugten Ausführungsform. Es zeigen:
- Figur 1: die teilweise abgebrochen und teilweise im Schnitt dargestellte Gesamtansicht der wesentlichen Teile der Verdrehvorrichtung mit dem Antrieb im unteren und den Werkstückträgern im oberen Bereich,
- Figur 2: einen Werkstückträger vergrößert mit seiner Anbringung über eine Platte und deren Führung, wenn man in Figur 1 in Richtung der Pfeile II-II blickt,
- Figur 3: eine Querschnittsansicht der Platte, wobei ihr verdickter oberer Teil nach rechts vorsteht,
- Figur 4: eine Querschnittsansicht durch die Platte entlang der Linie IV-IV der Figur 3,
- Figur 5: eine Draufsicht auf die Platte der Figur 3, wenn man von rechts nach links blickt,
- Figur 6: eine Draufsicht auf die Platte, wenn man auf die Figuren 3 und 5 von oben nach unten blickt,
- Figur 7: eine vergrößerte Seitenansicht eines Werkstückträgers,
- Figur 8: eine Querschnittsansicht entlang der Linie VIII-VIII der Figur 7,
- Figur 9: eine Draufsicht auf den Werkstückträger, wenn beispielsweise in Figur 7 der Blick von oben nach unten gerichtet ist,
- Figur 10: eine Schnittdarstellung durch die Eckenführungen des Werkstückträgers entlang der Linie IX-IX der Figur 7 und
- Figur 11: eine Draufsicht auf den verrasteten Werkstückträger mit Aufnahmeplatte und eingerasteten Spreizstiften.

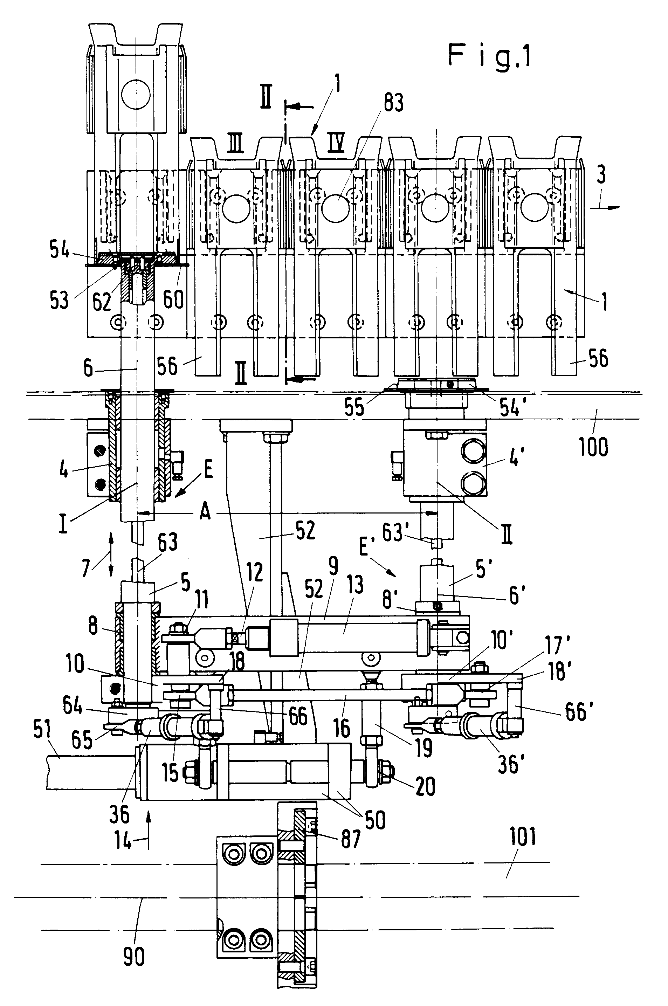

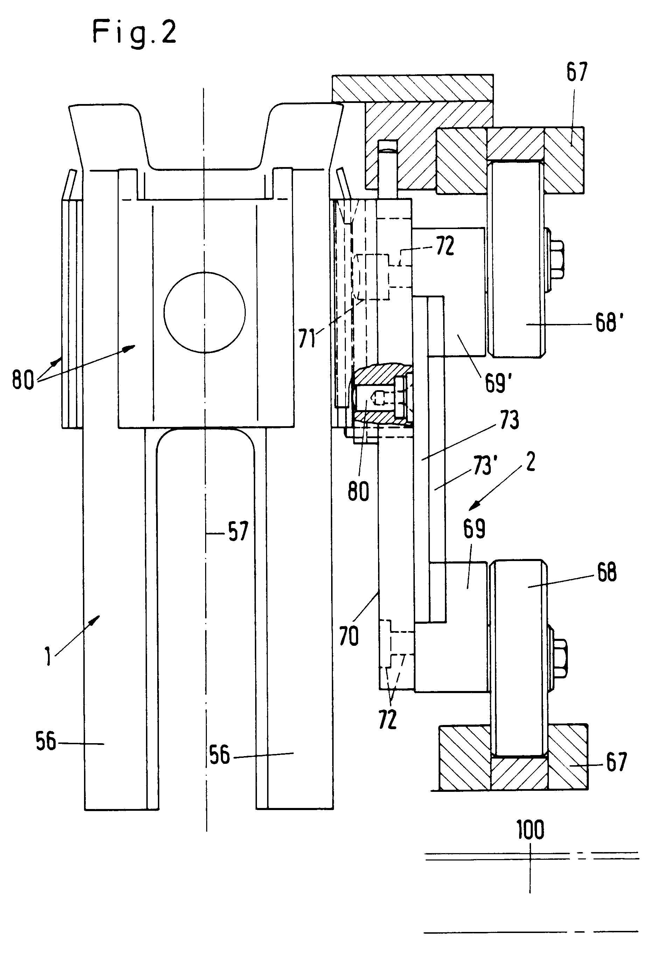

Die gesamte Vorrichtung zum Verdrehen der allgemein mit 1 bezeichneten Werkstückträger ist in deutlicher Übersicht in Figur 1 gezeigt. Hier befinden sich vier Werkstückträger 1 an einer in Figur 2 allgemein mit 2 bezeichneten Fördereinrichtung in der normalen Transporthöhe auf einer horizontal zu denkenden geraden Linie 3, deren Pfeilspitze die Transportrichtung darstellt, während der in Transportrichtung 3 hinterste Werkstückträger 1 im angehobenen, ausgeklinkten Zustand dargestellt ist, in welchem die Drehung vorgenommen werden kann. Am Maschinengestellt 100 sind in der Position I ein erstes oberes Gleitlager 4 und im Abstand A von zwei Werkstückträgern 1 in der Position II ein zweites oberes Gleitlager 4' befestigt, in welchen das als Hohlwelle ausgebildete Drehteil 5 bzw. 5' rotatorisch um die erste Schwenkachse 6 bzw. 6' und translatorisch in Richtung des Doppelpfeiles 7 bewegt werden kann. Wenn die Fördereinrichtung 2 die Werkstückträger 1 jeweils um zwei Positionen schrittweise vorbewegt, dann ist es sinnvoll, den Abstand A der beiden Gleitlager 4 und 4' in der gezeigten Weise so zu wählen, daß in beiden Positionen I und II gleichzeitig ein Anheben der Werkstückträger 1, Abkoppeln, Drehen, Absenken mit Einkoppeln durchgeführt wird. In Figur 1 ist gleichwohl zur besseren Darstellung der Werkstückträger 1 in der Position I angehoben und gleichzeitig der andere Werkstückträger in der Position II in der nicht angehobenen Stellung gezeigt. Dazwischen befinden sich die Positionen III und IV, wobei unter den Werkstückträgern in diesen Positionen III, IV keine Entkopplungseinheiten E bzw. E' gezeigt sind, welche den gesamten Antrieb für das Bewegen der Werkstückträger 1 bezeichnen und als wesentlichen Teil das Drehteil 5 bzw. 5' haben.

Der Antrieb für eine Entkopplungseinheit E wird anhand der in Figur 1 links gezeigten Entkopplungseinheit E nun erläutert. Das Drehteil 5 ist in einem zweiten Gleitlager 8 gelagert, welches mit einer Führungsbrücke 9 mit dem Gleitlager 8' der gegenüberliegenden Entkopplungseinheit E' so verbunden ist, daß beim Bewegen der Führungsbrücke in Richtung der ersten Schwenkachse 6, also gemäß Doppelpfeil 7, beide Drehteile 5 und 5' in Richtung ihrer ersten Schwenkachse 6 bzw. 6' translatorisch bewegt werden. Nach Entkoppeln des Werkstückträgers kann sich das als Hohlwelle ausgebildete Drehteil 5 (und auch das entsprechende Drehteil 5') im Gleitlager 8 drehen. Für diese Drehbewegung greift am Drehteil 5 außen der Drehhebel 10 an, der einerseits um die erste Schwenkachse 6 dreht und andererseits über das Gelenk 11 und die Kolbenstange 12 vom Luftzylinder 13 für diese Drehung angetrieben wird. Blickt man vom unteren Maschinenrahmen 101 in Richtung des Pfeiles 14 nach oben zum Gestell 100 hin, dann bewirkt bei Betätigung des Luftzylinders 13 ein Herausdrücken der Kolbenstange 12 nach links eine Drehung des Drehhebels 10 im Gegenuhrzeigersinn um 90°.

Am Drehhebel 10 ist ferner über ein Gelenk 15 eine Zugstange 16 mit einem gegenüberliegenden Gelenk 17 drehbar angeordnet, derart, daß beim Herausdrehen des Drehhebels 10 mit seinem rechten Ende 18 nach oben dem Betrachter entgegen die Zugstange 16 durch ihre Anlenkung dafür sorgt, daß auch der rechte Drehhebel 10' bei Blickrichtung in Pfeil 14 im Gegenuhrzeiger dreht, d.h. sein rechtes Ende 18' dem Betrachter der Figur 1 entgegenkommt. Damit dreht auch das in der Position II befindliche Drehteil 5' um seine erste Schwenkachse 6' in gleicher Weise wie bei der in Position I befindlichen Entkopplungseinheit E. Die Drehung beider Drehteile 5, 5, erfolgt also durch ein und denselben Luftzylinder 13, der entsprechend angesteuert wird. Soweit die rotatorische Bewegung des Drehteils 5, 5'.

Die translatorische Bewegung vom unteren Maschinenrahmen 101 zum oberen Maschinengestell 100 und zurück in Richtung des Doppelpfeiles 7 erfolgt über die Führungsbrücke 9, die von einer Zugstange 19 in Richtung des Doppelpfeiles 7 nach oben und unten gedrückt wird. Über ihr unteres Gelenk 20 ist diese Zugstange 19 mit einem Hebel 50 drehbar verbunden, welcher sich in Querrichtung parallel z.B. zur Führungsbrücke 9, zu dem darauf befindlichen Luftzylinder 13 und auch parallel zur Zugstange 16 verläuft. Dieser Hebel 50 erstreckt sich ferner in Blickrichtung des Betrachters der Figur 1, d.h. von dem vorderen Hebelteil 50 nach hinten, wo man im Hintergrund abgebrochen noch eine Drehachse 51 erkennt, um welche sich der Hebel 50 letztlich in Richtung des Doppelpfeiles 7 drehen kann. Diese Drehachse 51 ist nicht translatorisch bewegbar sondern stationär an der Abstützung 52 befestigt, welche ihrerseits am Maschinengestell 100 angebracht ist. Zusammen mit dem Hebel 50 und der an diesem angelenkten Führungsbrücke 9 bewegt sich also translatorisch in Richtung des Doppelpfeiles 7 die gesamte Entkopplungseinheit E bzw. E' mitsamt der Drehteile 5 bzw. 5'. Damit ist auch die translatorische Bewegung des schwenkbaren Drehteils 5, 5' beschrieben.

Das Drehteil 5 (wie auch das andere Drehteil 5') ist als Hohlwelle deswegen ausgestaltet, weil allgemein mit 53 bezeichnete Einrastmittel steuerbar vorgesehen sind. Während das untere Ende des Drehteils 5 vom Drehhebel 10 klemmend oder anderweitig befestigt antreibbar ist, befindet sich am oberen Ende des Drehteils 5 eine ebene, quer zur ersten Schwenkachse 6 ausgerichtete Aufnahmeplatte 54, deren Draufsicht in Figur 11 erkennbar ist. Außen hat diese Platte eine Schräge 55, die man z.B. in Figur 11 durch die Doppellinien erkennt, deren Profil aber auch aus Figur 1 sichtbar ist. Diese Schräge 55 dient dem besseren Eingreifen der Aufnahmeplatte 54 in das untere Ende der Werkstückträger 1, wie noch beschrieben wird.

Sogenannte Eckenführungen 56 der Werkstückträger 1 sind bogenförmig so ausgeführt, daß ihre Krümmungsachse parallel zur Mittellängsachse 57 des Werkstückträgers 1 verläuft. Im unteren Bereich der vier Eckenführungen 56 sind jeweils mittig Löcher 58 angeordnet, in welche Spreizstifte 59 einfahren können, welche in der Aufnahmeplatte 54 radial bewegbar angeordnet sind. In der Entkopplungsstellung können diese Spreizstifte 59 innerhalb des Außenumfanges der Schräge 55 der Aufnahmeplatte 54 zurückgezogen werden; während für den Eingriff des Drehteils 5 mit seiner Aufnahmeplatte 54 mit den Eckenführungen 56 der Werkstückträger 1 die Spreizstifte 59 radial nach außen derart gespreizt bzw. bewegt werden, daß die Spitzen der Spreizstifte 59 in die Löcher 58 unten in den Eckenführungen 56 eingreifen, wodurch die Eckenführungen 56 mit der Aufnahmeplatte 54 dann insbesondere dadurch verbunden und fest verkoppelt sind, daß die Unterkanten der Eckenführungen 56 auf den Rändern eines ebenen Tellers 60 aufliegen, welcher unter der Aufnahmeplatte 54 und in gleicher Ebene mit dem unteren Abschluß der Schrägen 55 befestigt ist.

Der Antrieb für die Spreizstifte 59 erfolgt gemäß Darstellung in Figur 11 über Kurbeln 61, wobei die Anzahl der Kurbeln gleich der Anzahl der Spreizstifte 59 ist, in der gezeigten Ausführungsform vier. Um vier Zapfen 62, welche auf einem gemeinsamen Kreis 63 um die Mittellängsachse 57 des Werkstückträgers 1 drehbar angetrieben sind, welche Achse 57 auch durch das Zentrum der Aufnahmeplatte 54 hindurchgeht (der Kreuzpunkt der Figur 11), sind die Kurbeln 61 drehbar in solcher Weise, daß mit Blick auf Figur 11 beim Drehen der Zapfen 62 im Uhrzeigersinn um eine achtel Drehung die Kurbeln 61 radial soweit nach außen geschoben werden, daß die Spitze der Spreizstifte 59 durch die Löcher 58 zur Verrastung gelangen. Dies ist die Einraststellung. Umgekehrt werden die Spitzen von den Löchern 58 in den Eckenführungen 56 dadurch außer Eingriff gebracht, daß die Spreizstifte 59 zurückgezogen werden, nämlich durch Drehung der Zapfen 62 im Gegenuhrzeigersinn wiederum um 45° um die Mittellängsachse 57 des Werkstückträgers 1, die in diesem Falle mit der ersten Schwenkachse 6 zusammenfällt.

Die Drehung der Zapfen 62 gelingt durch die Drehung einer Stange 63 (Figur 1) bzw. 63', in deren oberem Ende die vier Zapfen 62 eingesetzt sind. Das untere Ende der Stange 63 ist mit einer Kurbel 64 verklemmt, die einerseits um die erste Schwenkachse 6 dreht und exzentrisch das Gelenk 65 trägt, an welchem der Luftzylinder 36 angreift (entsprechend 36' bei der anderen Entkopplungseinheit E'), um die Schwenkbewegung um die erste Schwenkachse 6 durchzuführen. Der Luftzylinder 36 bzw. 36' ist an seinem dem Gelenk 65 gegenüberliegenden Ende an einem Bolzen 66 befestigt, der wiederum mit dem rechten vorderen Ende 18 (bzw. der Bolzen 66' mit dem Ende 18') des oben bereits beschriebenen Drehhebels 10 verbunden ist. Dies bringt den Vorteil mit sich, daß die Drehung der inneren Stange 63 bzw. ihre Drehposition bezüglich der diese Stange 63 konzentrisch umgebenden Hohlwelle als Drehteil 5 auch bei der rotatorischen Bewegung des Drehteils 5 fest bleibt. Nur die Betätigung des Luftzylinders 36 bzw. 36' bewirkt damit ein Drehen der Stange 63 im Drehteil 5 (bzw. der Stange 6' im Drehteil 5'), wodurch das Entkoppeln der am Drehteil 5 befestigten Aufnahmeplatte 54 vom Werkstückträger 1 bzw. das Einkoppeln separat steuerbar ist.

Betrachtet man die Ansicht II-II in Figur 1, dann sieht man bei teilweise abgebrochenen Teilen die Darstellung der Figur 2. Unten rechts ist wieder das Gestell 100 zu erkennen, an welchem eine untere Schiene 67 und im Abstand dazu eine obere Schiene 67' stationär angebracht sind, um Rollen 68, 68' zu führen. Die Drehachsen der Rollen befinden sich an Klemmstücken 69, 69', mit deren Hilfe über eine allgemein mit 70 bezeichnete Platte mittels Schrauben 71 in Löchern 72 ein Kunststoffzahnriemen 73 festgeklemmt ist, dessen in Figur 2 auf der rechten Seite liegenden Zähne 73' in nicht dargestellte Antriebs- und Umlenkräder eingreifen derart, daß die Hauptebene des in Figur 2 im Schnitt dargestellten geraden Trums dieses Endlosriemens 73 vertikal liegt. Damit liegt vertikal parallel fest auch die im wesentlichen ebene Platte 70, an welcher wiederum über Einsteckteile 80 die Werkzeugträger 1 gehaltert werden. Auf diese Weise können also die in Draufsicht der Figur 1 in einer Reihe hintereinander angeordneten Werkzeugträger 1 in Transportrichtung 3 mit Hilfe der Rollen 68, 68' in den Führungsschienen 67, 67' geführt und bewegt werden.

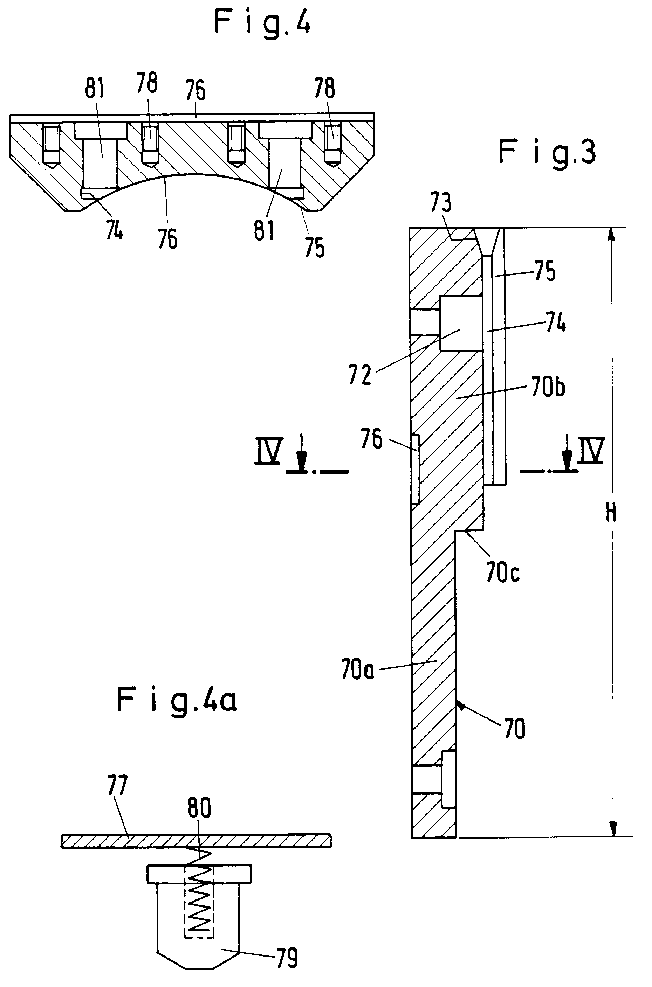

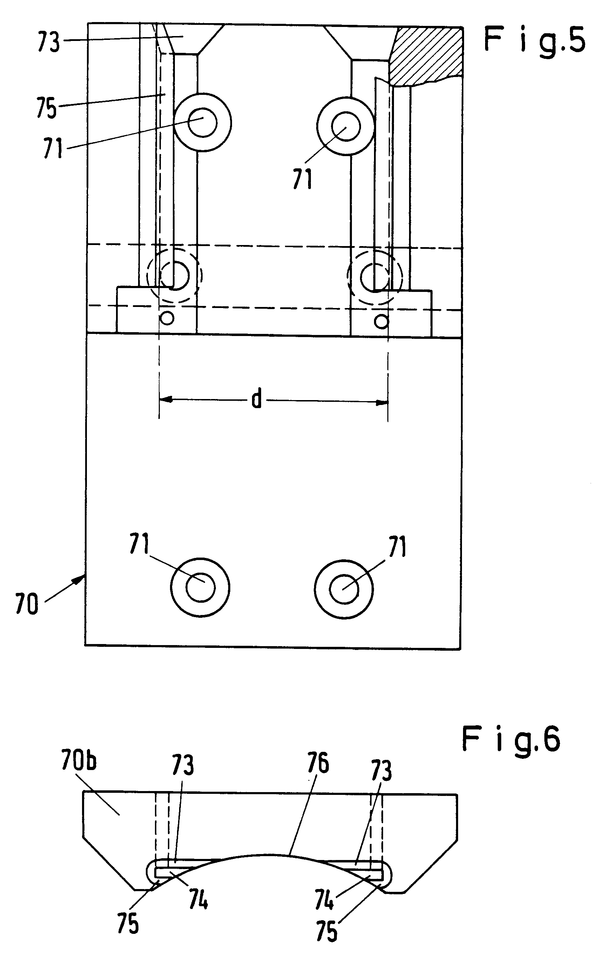

Die am Endloszahnriemen 73 in einer endlosen Reihe strangartig hintereinander angeordneten Platten 70 erkennt man am besten anhand der Figuren 3 bis 6. Die sich etwa über zwei Drittel der höhe des Werkstückträgers 1 mit der Höhe H sich erstreckende Platte 70 besteht aus einem im Querschnitt der Figur 3 dünneren unteren Teil 70a und einem verdickten oberen Teil 70b. Die diese beiden Teile 70a, 70b voneinander trennende Stufe 70c ist etwa in der Mitte auf halber Höhe H der Platte 70 angebracht. Im oberen, verdickten Teil 70b sieht man die Aufnahmelöcher 72 für die Befestigungsschrauben 71 am Riemen 73, aber auch im unteren Teil 70a befinden sich zwei Löcher 71. Durch diese vier Löcher 71 ist die Platte 70 sehr gut und stabil am Endloszahnriemen 73 anbringbar. Auf der der Stufe 70c gegenüberliegenden, oberen Seite des verdickten Teils 70b der Platte 70 erkennt man Einführungsschrägen 73, die gemäß Darstellung der Figur 6 wie ein länglicher Trichter U-förmig umlaufen und nach unten hin in Haltenuten 74 übergehen, welche in der Draufsicht auf die Platte 70 gemäß Figur 5 von vorn durch Nasen 75 verdeckt werden, durch welche die Haltenuten 74 auch gebildet sind. Die im wesentlichen ebene Platte 70, deren Hauptebene bei der Darstellung der Figur 5 parallel zur Papierebene verläuft, weist zwischen den zwei im Querschnitt U-förmigen Haltenuten 74, die im Abstand d voneinander angeordnet sind, eine Einbuchtung 76 auf. Diese Einbuchtung erkennt man deutlich auch im Querschnitt der Figur 4. Sie hat die Gestalt einer Teilzylindermantelfläche und ist erforderlich, um die Drehung des Werkstückträgers 1 an der Platte 70 vorbei um die Mittellängsachse 57 des Werkstückträgers 1 zu ermöglichen, ohne daß die Eckenführungen 56 des Werkstückträgers 1 mit dem verdickten Teil 70b der Platte 70 zum Anschlagen kommen. Der obere verdickte Teil 70b der Platte 70 ist deshalb stärker ausgeführt, um eine einwandfreie Befestigung am Endlosriemen 73 ohne Spiel zu ermöglichen, während sich der dünnere Teil 70a der bezüglich der Höhe H der Platte 70 unteren Hälfte zur Materialersparnis kleinere Masse haben kann. Es ist übrigens zweckmäßig, diese Platte 70 aus einem harten Kunststoff herzustellen, z.B. einem Duroplast oder dergleichen.

Auf der Rückseite weist die Platte 70 in der Höhe der gestrichelten Linie IV-IV der Figur 3 eine Nut 76 auf, in welcher eine in Figur 4a abgebrochen dargestellte harte Platte 77 mittels Schraubbolzen 78, die in dem verdickten Teil 70b eingesetzt sind, befestigt werden kann. Diese Platte 77 ist dafür da, Druckbolzen 79 entgegen der Kraft von Druckfedern 80 in zwei Löchern 81 nach vorn zur Seite der Einbuchtung 76 hin herauszudrücken, um einen Druck- und Klemmkontakt mit den Einsteckteilen 80 des Werkstückträgers 1 vorzusehen, damit dieser fest an der Platte 70 und damit präzise fest am Endlosriemen 73 sitzt.

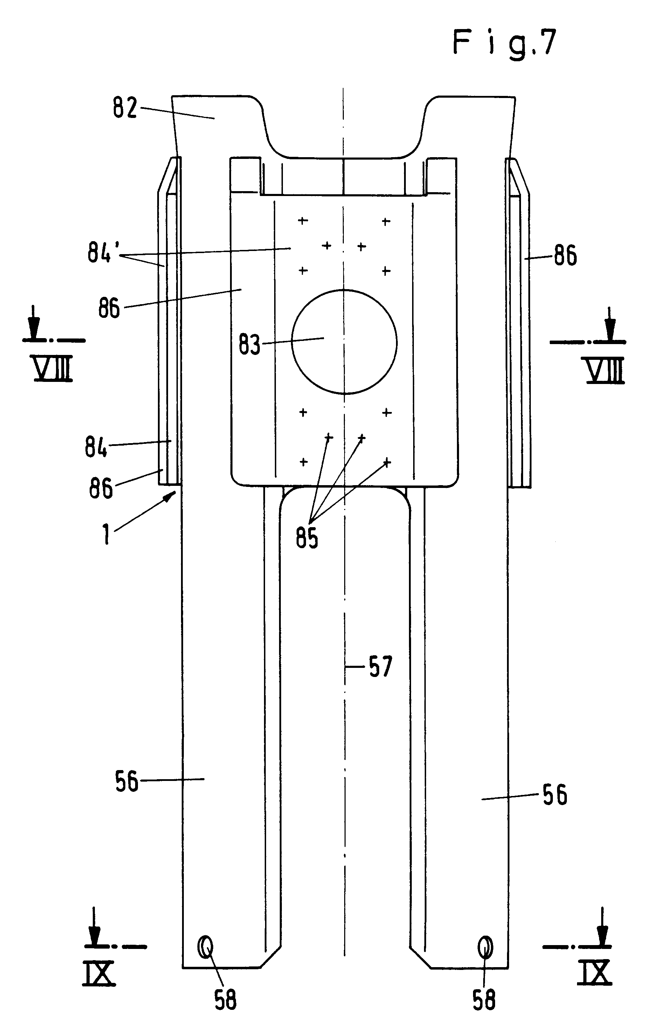

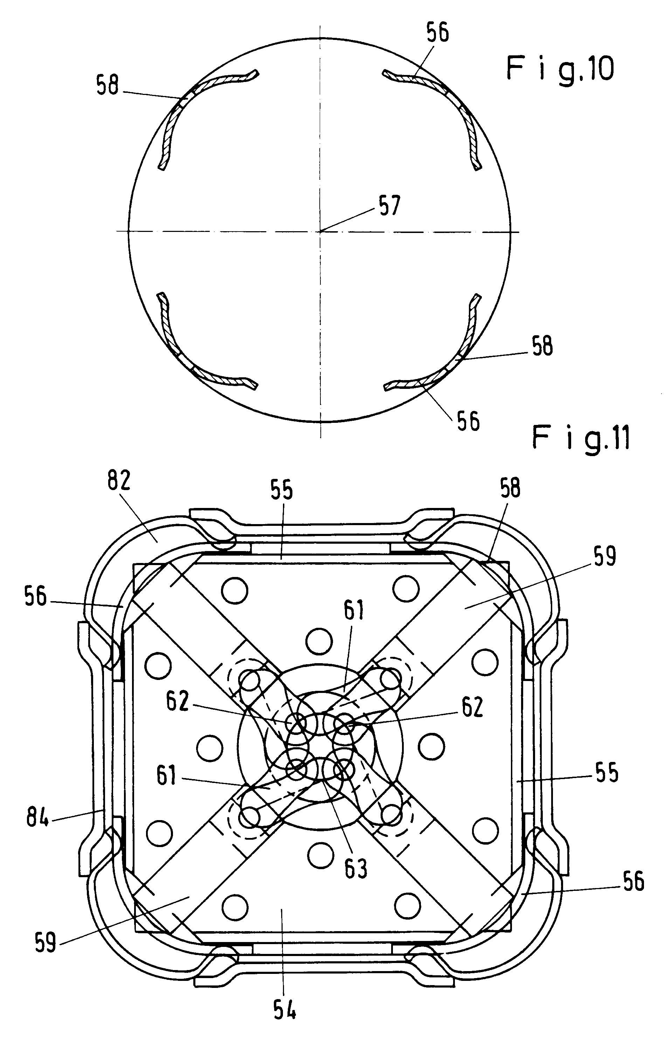

Während die durch die Nasen 75 an der Platte 70 vorn gebildeten Haltenuten 74 die Aufnahmeteile für die Einsteckteile 80 der Werkstückträger 1 darstellen, läßt sich die Gestalt der Einsteckteile 80 bei der Betrachtung des Werkstückträgers 1 in Verbindung mit den Figuren 7 bis 11 gut erläutern.

Der Werkstückträger 1 ist als hülsenförmiger Hohlkörper ausgebildet mit einer Mittellängsachse 57 und einer im Querschnitt quadratischen Form mit abgerundeten Ecken. Die bereits erwähnten Eckenführungen 56 erstrecken sich von der Unterkante neben den Löchern 58 für die Befestigung des Werkstückträgers 1 an der Aufnahmeplatte 54 bis nach oben zu Einführschrägen 82 hin, welche bei der Draufsicht auf den Werkstückträger 1 nach Figur 11 etwas schräger zur Mittellängsachse 57 geneigt sind als bei der Ausführungsform nach den Figuren 7 bis 10. Die Funktion ist aber die gleiche.

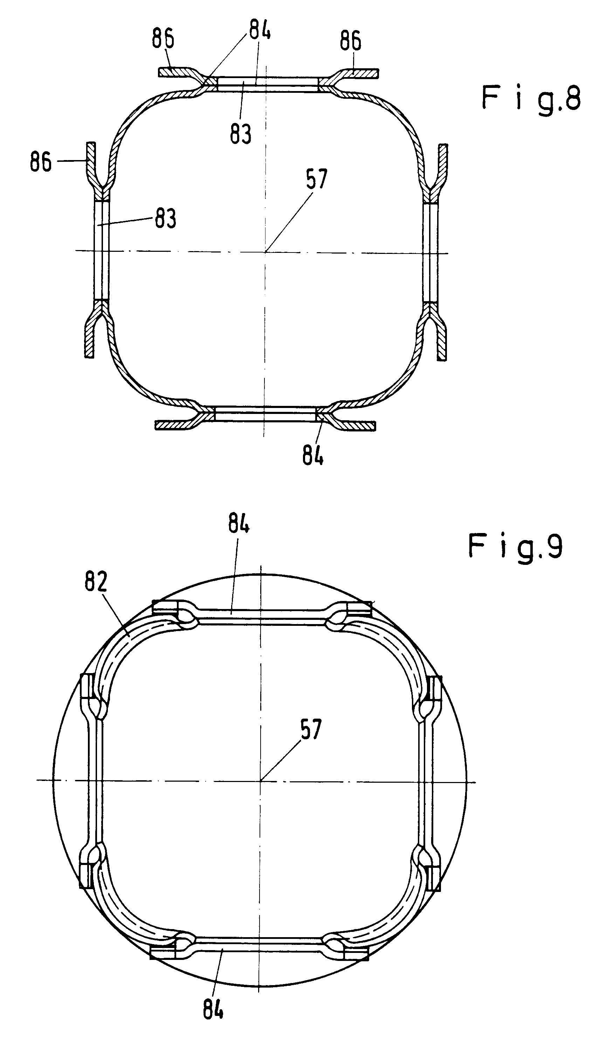

Zwischen den an den vier Ecken des im Querschnitt quadratisch aufgespannten Hohlkörpers des Werkstückträgers 1 befindlichen Eckenführungen 56 verlaufen Seitenwandungen, in deren Mitte ein großes Loch 83 auf jeder der vier Seitenflächen vorgesehen ist, damit unabhängig von der (um z.B. 90° schrittweise vorgesehenen) Drehung um die Mittellängsachse 57 stets eine Öffnung für einen Druckstempel vorliegt, der zur Volumenverkleinerung der im Werkstückträger 1 getragenen Hülse durch das Loch 83 einfährt. Auch zwischen den Eckenführungen 56 ist entsprechender Raum zum Einfahren von Druckstempeln oder dergleichen vorgesehen. Außen ist auf jeder im wesentlichen ebenen Seitenwandung eine Führungsplatte 84 durch Punktschweißen bei 85 angebracht. Es versteht sich, daß bündig zum Loch 83 in der betreffenden Seitenwandung auch in der Führungsplatte 84 das entsprechende Loch 83 angeordnet ist. An den Längsrändern, welche sich parallel zur Mittellängsachse 57 erstrecken, sind abgekröpfte Führungsschienen 86 als Einsteckteile 80 ausgebildet. Man erkennt insbesondere aus Figur 8, daß diese Führungsschienen 86 gut in die in den Figuren 5 und 6 gezeigten Haltenuten 74 der Platte 70 von oben nach unten in Richtung parallel zur Mittellängsachse 57 einschiebbar sind.

Im Betrieb bewegt sich der Endloszahnriemen 73 aus Kunststoff um nicht dargestellte Umlenkzahnräder mit vertikalen Achsen, so daß sein in Figur 1 vorn erkennbares gerades Trum in vertikaler Ebene verläuft. An diesem Endlosriemen 73 befindet sich die als endloser Strang angebrachte Reihe von Platten 70 mit den Haltenuten 74 und Befestigungseinrichtungen 79, 80, damit die Werkstückträger 1 mit ihren Führungsschienen 86 von der jeweiligen Platte 70 stabil und fest gehaltert sind. Strangartig bewegt sich nun die Reihe von Werkstückträgern 1 in Transportrichtung 3. Hat der betrachtete vordere Werkstückträger 1 die Position II und der hintere die Position I erreicht, dann wird durch die betreffende Position der in Figur 1 gezeigten und um die Drehachse 90 umlaufende Steuerkurve 87 der um die Drehachse 51 schwenkbare Hebel 50 so hochgeschoben, daß die Führungsbrücke 9 die beiden Drehteile 5, 5' in die in Figur 1 links gezeigte Position hochschiebt. Gleichzeitig haben die Luftzylinder 36, 36' für das radiale Spreizen der Spreizstifte 59 gesorgt, so daß die Eckenführungen 56 der beiden Werkstückträger 1 fest an den beiden Aufnahmeplatten 54, 54' verankert sind. Nach Erreichen der entkuppelten Position wird der Luftzylinder 13 betätigt und dreht jeden der beiden Werkstückträger 1 um 90°, wonach die Steuerkurve 87 entsprechend so weitergedreht wurde, daß eine Absenkung der Führungsbrücke 9 ein Einkoppeln der Werkstückträger 1 an ihren Platten 70 vorsieht. Die Luftzylinder 36, 36' ziehen die Spreizstifte 59 zurück, und die Werkstückträger 1 hängen nun wieder frei am Riemen 73, der um zwei Positionen weiter in Transportrichtung 3 bewegt wird, so daß der soeben verdrehte hintere Werkstückträger aus der Position I in die Position IV befördert wird. Ein nochmaliges Drehen desselben unterbleibt und ist auch nicht erwünscht.

## Patentansprüche

1. Vorrichtung zum Verdrehen von mittels einer Fördereinrichtung (2) transportierten Werkstücken, bei welcher ein Werkstückträger (1) lösbar am Förderstrang (70; 73) angeordnet und mit einer Entkopplungseinheit (E, E') in Eingriff bringbar ist, die ein um eine erste Achse (6, 6') schwenkbar angetriebenes Drehteil (5, 5') aufweist, wobei die erste Achse (6, 6') senkrecht zur Transportrichtung (3) der Fördereinrichtung (2) gerichtet ist, und das schwenkbare Drehteil (5, 5') sowohl rotatorisch als auch translatorisch in Richtung der ersten Schwenkachse (6, 6') bewegbar angetrieben ist, dadurch gekennzeichnet, daß am Werkstückträger (1) sich in Richtung der ersten Schwenkachse (6, 6') erstreckende Einsteckteile (80) befestigt sind, die in entsprechende, am Förderstrang (70, 73) befestigte Aufnahmeteile (74) einführbar sind, so daß für ein Verdrehen der Werkstücke am Förderstrang (70; 73) selbst der Werkstückträger (1) außer Eingriff mit dem Förderstrang (70; 73) gebracht wird, er dann um den gewünschten Winkel gedreht und danach wieder in Eingriff mit dem Förderstrang (70; 73) gebracht wird.

2. Vorrichtung nach Anspruch 1, dadurch gekennzeichnet, daß die Transportrichtung (3) der Fördereinrichtung (2) horizontal liegt und die erste Schwenkachse (6, 6') des Drehteils (5, 5') vertikal verläuft, daß das Drehteil (5, 5') als eine an wenigstens zwei Stellen (4, 8) gelagerte Welle ausgebildet ist und daß die Fördereinrichtung (2) einen Endlosriemen (73, 73') aufweist.

3. Vorrichtung nach einem der Ansprüche 1 oder 2, dadurch gekennzeichnet, daß am Drehteil (5, 5') der Entkopplungseinheit (E, E') eine ebene, quer zur ersten Schwenkachse (6, 6') ausgerichtete Aufnahmeplatte (54) mit Einrastmitteln (53) für den Eingriff mit dem Werkstückträger (1) befestigt ist.

4. Vorrichtung nach einem der Ansprüche 1 bis 3, dadurch gekennzeichnet, daß der Werkstückträger (1) als hülsenförmiger, die Werkstücke wenigstens teilweise umgreifender Hohlkörper ausgebildet ist, dessen Mittellängsachse (57) in am Förderstrang (70, 73) angebrachter Stellung parallel zur ersten Schwenkachse (6, 6') liegt und an dessen Seitenwandungen wenigstens zwei in einem Winkel zueinander angebrachte und Führungsschienen (86) als Einsteckteile (80) aufweisende Führungsplatten (84) befestigt sind.

5. Vorrichtung nach einem der Ansprüche 1 bis 4, dadurch gekennzeichnet, daß der Förderstrang (70, 73) eine fortlaufende Reihe von am Endlosriemen (73, 73') angebrachten Platten (70) aufweist, an denen als Aufnahmeteile (74, 75) für die Einsteckteile (80) der Werkstückträger (1) durch Nasen (75) gebildete Haltenuten (74) befestigt sind, wobei vorzugsweise der Endlosriemen (73, 73') um vertikale Achsen umlaufend vorgesehen ist.

6. Vorrichtung nach Anspruch 5, dadurch gekennzeichnet, daß die Platte (70) im wesentlichen eben ist, daß die Haltenuten (74) im Abstand voneinander angeordnet sind, sich nur über einen Teil der in Richtung parallel zur ersten Schwenkachse (6, 6') verlaufenden Höhe (H) der Platte (70) und in eben dieser Richtung (6, 57) erstrecken und daß ihre offenen Seiten einanderzugerichtet sind und daß zwischen den Haltenuten (74) eine nach außen offene, teilzylindermantelförmige Einbuchtung (76) vorgesehen ist.

7. Vorrichtung nach einem der Ansprüche 5 oder 6, dadurch gekennzeichnet, daß im Abstand von wenigstens einer der in einer fortlaufenden Reihe am Endlosriemen (73, 73') angebrachten Platten (70) in Transportrichtung (3) des Endlosriemens (73, 73') hinter der ersten Entkopplungseinheit (E) eine zweite Entkopplungseinheit (E') angeordnet ist, die beide einen gemeinsamen Antrieb (9, 50, 51), vorzugsweise mit Luftzylindern (13), haben.

8. Verwendung der Vorrichtung nach einem der Ansprüche 1 bis 7 zum Wenden von mit einer Längssiegelnaht versehenen Papierhülsen für die Herstellung von Fließmittelpackungen.

## Claims

1. A device for twisting workpieces which are transported by a conveyer device (2), wherein a workpiece carrier (1) is arranged detachably on the conveyer line (70; 73) and can be brought into engagement with a decoupling unit (E, E') which has a rotating member (5, 5') which is pivotally driven about a first axis (6, 6'), wherein the first axis (6, 6') is oriented perpendicularly to the transportation direction (3) of the conveyer device (2), and the pivotable rotating member (5, 5') is driven so that it can move both with rotary movement and with translatory movement in the direction of the first pivot axis, characterised in that fixed to the workpiece carrier (1) are insertion members (80) which extend in the direction of the first pivot axis (6, 6') and which can be introduced into corresponding receiving members (74) secured to the conveyer line (70, 73), so that to twist the workpieces on the conveyer line (70; 73), the workpiece carrier (1) is itself disengaged from the conveyer line (70; 73), is then turned through the desired angle, and is then engaged again with the conveyer line (70; 73).

2. A device according to Claim 1, characterised in that the transportation direction (3) of the conveyer device (2) is disposed horizontally, and the first pivot axis (6,6') of the rotating member (5,5') extends vertically, that the rotating member (5,5') is in the form of a shaft mounted at at least two locations (4, 8), and that the conveyer device (2) has a continuous belt (73, 73').

3. A device according to one of Claims 1 or 2, characterised in that fixed to the rotating member (5,5') of the decoupling unit (E,E') is a flat receiving plate (54) oriented transversely with respect to the first pivot axis (6,6') and having locking means (53) for engagement with the workpiece carrier (1).

4. A device according to one of Claims 1 to 3, characterised in that the workpiece carrier (1) is in the form of a sleeve-like hollow body at least partially embracing the workpieces, the central longitudinal axis (57) of which hollow body is disposed in a position arranged on the conveyer line (70, 73) parallel to the first pivot axis (6,6'), and on the side walls of which hollow body are secured at least two guide plates (84) which are arranged at an angle to each other and which have insertion members (80) in the form of guide rails (86).

5. A device according to one of Claims 1 to 4, characterised in that the conveyer line (70, 73) has a continuous row of plates (70) which are arranged on the continuous belt (73, 73'), to which plates retaining grooves (74) in the form of catches (75) are secured for the insertion members (80) of the workpiece carrier (1), wherein the continuous belt (73, 73') is preferably provided so that it rotates about vertical axes.

6. A device according to Claim 5, characterised in that the plate is substantially flat, that the retaining grooves (74) are arranged at a spacing from each other, extend only over a part of the height (H) of the plate (70) extending in the direction parallel to the first pivot axis (6, 6'), and extend in this very direction (6, 57), and that their open sides are oriented so that they face each other, and that provided between the retaining grooves (74) is an outwardly open, partly cylindrical casing-like recess (76).

7. A device according to one of Claims 5 or 6, characterised in that at a spacing from at least one of the plates (70), arranged in a continuous row on the continuous belt (73, 73') behind the first decoupling unit (E), there is a second decoupling unit (E') and both decoupling units have a common drive means (9, 50, 51), preferably with air cylinders (13).

8. Use of the device according to one of Claims 1 to 7, for turning paper casings provided with a longitudinal sealing seam for manufacturing packs for liquids.

## Revendications

1. Dispositif pour faire pivoter des pièces à usiner transportées au moyen d'un dispositif convoyeur (2) et dans lequel un porte-pièce (1) est monté amovible sur la voie de convoyage (70;73) et peut être amené en prise avec une unité de découplage (E,E'), qui possède une partie tournante (5,5'), entraînée en pivotement autour d'un premier axe (6,6'), le premier axe (6,6') étant orienté perpendiculairement à la direction de transport (3) du dispositif convoyeur (2), et la partie tournante pivotante (5,5') étant actionnée de manière à être déplaçable aussi bien en rotation qu'en translation dans la direction du premier axe de pivotement (6,6'), caractérisé en ce que, sur le porte-pièce (1), sont fixés des éléments d'enfichage (80), qui s'étendent dans la direction du premier axe de pivotement (6,6') et qui peuvent être introduits dans des parties correspondantes de réception (74) fixées à la voie de convoyage (70;73), de sorte que, pour faire pivoter les pièces à usiner sur la voie de convoyage (70;73) elle-même, le porte-pièce (1) est mis hors de prise d'avec la voie de convoyage (70;73), puis il est déplacé en rotation sur l'angle désiré et est ensuite amené à nouveau en prise avec la voie de convoyage.

2. Dispositif selon la revendication 1, caractérisé en ce que la direction de transport (3) du dispositif convoyeur (2) est horizontale et le premier axe de pivotement (6,6') de la partie tournante (5,5') s'étend verticalement, en ce que la partie tournante (5,5') est réalisée sous la forme d'un arbre tourillonné en au moins deux emplacements (4,8) et en ce que le dispositif convoyeur (2) possède une courroie sans fin (73,73').

3. Dispositif selon l'une des revendications 1 ou 2, caractérisé en ce qu'une plaque plane de réception (54), qui est orientée transversalement au premier axe de pivotement (6,6') et comporte des moyens d'encliquetage (53) pour la mise en prise avec le porte-pièce (1), est fixée à la partie tournante (5,5') de l'unité de découplage (E,E').

4. Dispositif selon l'une des revendications 1 à 3, caractérisé en ce que le porte-pièce (1) est conçu en tant que corps creux en forme de douille, entourant au moins partiellement les pièces à usiner, corps creux dont l'axe médian longitudinal (57) est parallèle au premier axe de pivotement (6,6'), lorsque le porte-pièce est installé dans la voie de convoyage (70,73), et sur les parois latérales duquel sont fixées au moins deux plaques de guidage (84) qui sont disposées de manière à faire un angle entre elles et possèdent des rails de guidage (86) en tant qu'éléments d'enfichage (80).

5. Dispositif selon l'une des revendications 1 à 4, caractérisé en ce que la voie de convoyage (70,73) possède une série continue de plaques (70) qui sont montées sur la courroie sans fin (73,73'), et auxquelles sont fixées, en tant que parties de réception (74,75) pour les éléments d'enfichage (80) du porte-pièce (1), des rainures de retenue (74), définies par des becs (75), auquel cas, de préférence, la courroie sans fin (73,73') est disposée de manière à pouvoir circuler autour d'axes verticaux.

6. Dispositif selon la revendication 5, caractérisé en ce que la plaque (70) est essentiellement plane, en ce que les rainures de retenue (74) sont disposées à distance l'une de l'autre et s'étendent seulement sur une partie de la hauteur (H), considérée dans une direction parallèle au premier axe de pivotement (6,6'), de la plaque (70) et précisément dans cette direction (6,57), et leurs côtés ouverts sont dirigés l'un vers l'autre et en ce qu'un renfoncement (76), ouvert vers l'extérieur et en forme de surface cylindrique partielle est prévu entre les rainures de retenue (74).

7. Dispositif selon l'une des revendications 5 ou 6, caractérisé en ce qu'à distance d'au moins l'une des plaques (70) montées selon une suite continue sur la courroie sans fin (73,73'), est disposée, en arrière de la première unité de découplage (E) dans la direction de transport (3) de la courroie sans fin (73,73'), une seconde unité de découplage (E'), les deux unités de découplage comportant un dispositif d'actionnement commun (9,50,51), équipé de préférence de vérins pneumatiques (13).

8. Utilisation du dispositif selon l'une des revendications 1 à 7 pour le retournement de manchons en papier pourvus d'un cordon de scellement longitudinal, pour la fabrication d'emballages de substances aptes à s'écouler.
